(19) Europäisches Patentamt

European Patent Office

Office européen des brevets

(11) **EP 4 650 037 A1**

(12) **EUROPEAN PATENT APPLICATION**

(43) Date of publication:
**19.11.2025  Bulletin 2025/47**

(21) Application number: **24176402.6**

(22) Date of filing: **16.05.2024**

(51) International Patent Classification (IPC):
***B01D 63/08*** (2006.01)

(52) Cooperative Patent Classification (CPC):
**B01D 63/087;** B01D 2313/086; B01D 2315/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Technische Universität München
80333 München (DE)**

(72) Inventors:
• **STEGEMEYER, Ulf Christopher
80333 München (DE)**

• **WÜRKNER, Raimund
80333 München (DE)**
• **BEERHALTER, Dennis
80333 München (DE)**
• **ZAVREL, Michael
80333 München (DE)**

(74) Representative: **Lucke, Andreas
Boehmert & Boehmert
Anwaltspartnerschaft mbB
Pettenkoferstrasse 22
80336 München (DE)**

(54) **A FILTERING SYSTEM AND FILTERING SYSTEM RECYCLING METHOD**

(57)      A filtering system for a fluid channel comprising a first filter component and a second filter component each comprising a fluid port for coupling to the fluid channel on opposite sides of the filtering system and configured for mutual engagement at a respective filter side for holding a filtering membrane between the first filter component and the second filter component, such that the filtering membrane is arranged in a fluid path through the filtering system between the respective fluid ports; wherein the first filter component and/or the second filter component comprise/s a fluid distribution section arranged between the filtering membrane and the respective fluid port, and wherein the fluid distribution section comprises an annular channel, arranged radially outward with respect to the central conduit, for guiding the fluid towards a radially outward portion of the filtering membrane with a fluid flow component along the axial direction.

Fig. 1

## Description

FIELD OF THE INVENTION

The present invention is in the field of filtering systems for gas streams. More precisely, the present invention relates to filtering systems with an improved structure for waste reduction, particularly in filtering applications for bioprocess engineering.

BACKGROUND

Bioprocess engineering plays an important role in several fields, such as in the development of new medicines and in the use of renewable raw materials. For example, microorganisms, algae, animal and human cells, insect cells and/or enzymes are currently already used to produce products such as antibodies, vaccines, proteins, enzymes, biofuels, biopolymers, etc. In such applications, it is typically necessary to ensure that only the desired cells and/or enzymes are present in the bioreactor and that no foreign germs enter the bioreactor. Foreign germs, also referred to as "contamination", lead to the formation of undesirable and possibly even toxic by-products and/or can displace or overgrow the existing cells/enzymes. Such contamination must therefore be avoided at all costs.

It is also often required that the cells and/or enzymes remain in the bioreactor and are not released to the outside, as the cells and/or enzymes can pose a risk to humans and the environment, or to prevent access to the cells to any third party, for example a competitor. Thus, bioreactors are generally operated as closed systems in which contaminants are prevented from entering the bioreactor, while cells and/or enzymes cannot leave the bioreactor. At the same time, in most biotechnological processes, a continuous supply and/or removal of gases is required for the efficient formation of the target product.

For example, in aerobic cultivations, the cultivated cells require a constant supply of oxygen, while carbon dioxide ($CO_2$), which is a typical metabolic product, must be removed, not only in aerobic but also in anaerobic cultivation. In the case of photosynthetically active cells, the reverse may also be necessary, i.e. gassing with $CO_2$ and removal of oxygen. Similarly, gas fermentations in which $CO_2$ or synthesis gas is microbiologically converted into valuable products require a constant supply of gas.

Gas filters can be used for the incoming gas ("supply air") and the outgoing gas ("exhaust air"). These gas filters consist of a housing and a filtering membrane, and are commonly produced as one-time-use filters, to prevent contamination.

For example, US 9,675,755 B2 teaches a single-use filter cartridge composed of an inlet portion and an outlet portion configured to clamp a filtering membrane between each other, with a sealing ring glued or welded around the junction of the inlet and outlet portions for sealing the filter cartridge. A fluid stream is guided axially into the filter cartridge and can flow over the surface of the filtering membrane by means of recesses in the inlet and outlet portions facing the filtering membrane.

SUMMARY OF THE INVENTION

The known filtering systems however generate large portions of plastic waste due to the use of single-use filter cartridges and associated limits placed on single-use part machining. Specifically, many currently available filtering systems can feature premature blockage, wherein the filter cartridge blocks a stream of air, which the inventors of the present invention attribute to an uneven accumulation of material in the fluid path through the cartridge with sub-optimal fluid guidance. When the filter cartridge is exhausted/blocked, the entire cartridge is disposed of.

In view of this state-of-the-art, the object of the invention is to provide a filter cartridge which can feature improved lifetime and reliability with the option of being recycled to reduce waste.

This object is solved by the filtering system and the method according to the independent claims. The dependent claims relate to preferred embodiments.

According to a first aspect, a filtering system for a fluid channel is provided comprising a first filter component and a second filter component each comprising a fluid port for coupling to the fluid channel on opposite sides of the filtering system. The first filter component and the second filter component are configured for mutual engagement at a respective filter side for holding a filtering membrane between the first filter component and the second filter component, such that the filtering membrane is arranged in a fluid path through the filtering system between the respective fluid ports. The first filter component and/or the second filter component comprise/s a fluid distribution section arranged between the filtering membrane and the respective fluid port, and the fluid distribution section comprises a central conduit arranged to direct a fluid towards a center of the filtering membrane along an axial direction of the filtering system and an annular channel, arranged radially outward with respect to the central conduit, for guiding the fluid towards a radially outward portion of the filtering membrane with a fluid flow component along the axial direction.

Contrary to the prior art, the filtering system comprises a fluid distribution section which may distribute a flow of the fluid through the filtering system over the filtering membrane. The annular channel may enable uniform distribution of the fluid over the filtering membrane. In particular, a sheet of fluid flow defined by the annular channel may substantially flow along an extension direction of the annular channel which should be inclined with respect to a surface of the filtering membrane to drive a flow towards the membrane, e.g. along the axial direction of the filtering system. The axial direction may be aligned with the surface normal of the filtering membrane and/or a direction of a net flow of the fluid through the filtering system. The annular channel may reduce premature blocking of the filtering system due to uneven material accumulation in the filtering membrane, e.g. due to primarily radial and circumferential fluid distribution. Conversely, the annular channel is associated with a fluid flow component along the axial direction, wherein an angle between the axial direction and a primary (e.g. mean) flow direction of the fluid through the annular channel may be smaller than 80°, smaller than 60°, smaller than 45° or smaller than 30°, such as substantially along the axial direction. An end of the annular channel may be adjacent to the filtering membrane, such as to guide the fluid onto the radially outward portion of the filtering membrane. As a result, the effective lifetime of the filtering system may be increased. Moreover, the enhanced fluid distribution through the filtering system may improve an autoclaving of the filter components, such that the filtering system may be recycled for repeated use. Correspondingly, the first and second filter components may comprise and/or may be made of autoclavable materials, such as a metal or an autoclavable plastic, e.g. polypropylene.

In some examples, the annular channel is configured for guiding a sheet of fluid towards the filtering membrane, wherein a thickness (or a diameter) of the annular channel along a radial direction is in particular smaller than an extension of the annular channel along the axial direction of the filtering system, and/or wherein an angle between a flow direction through the annular channel and the axial direction is in particular smaller than 60°, such as smaller than 45° or smaller than 30°.

The fluid channel may be a gas conduit for a gas stream, in particular a gas stream flowing through a bioreactor system, such as an exhaust or supply stream of gas for a bioreactor. In some examples, the fluid is a gas, in particular an exhaust gas from a bioreactor or a supply gas for a bioreactor, and the filtering system may be used to filter the supply gas and/or the exhaust gas. The fluid channel may be composed of pipe sections, and the filtering system may be inserted between sections of pipe to filter a fluid stream through the fluid channel. The fluid ports of the first and second filter components may be fluid inlets and fluid outlets, respectively, for coupling different pipe sections of the fluid channel to the filtering system. The pipe may be a flexible tube, such as a flexible tube of a bioprocess engineering system for conveying a stream of gas, e.g. a silicone or PVC tube. The flexible tube may be coupled to the fluid port(s) by means of a pipe adapter, or may slide over an integral tubing adapter of the fluid ports, respectively. However, the skilled person will appreciate that the filter components are not limited to application with flexible tubes, but may equally be coupled to rigid tubes, and generally any suitable tubing for fluid (gas) channels, e.g. employed in bioprocess engineering systems. For example, the filtering system may be coupled at one or both sides to metallic tubes which may be flexible or non-flexible, and the pipe adapter and/or the fluid port(s) may be adapted accordingly to the pipes of the fluid channel.

The fluid port(s) may be configured to couple to the fluid channel and may be arranged at a side of the respective filter component which is opposite to the filter side for holding the filtering membrane. The fluid port(s) may extend at an angle with respect to the axial direction, e.g. to reduce a spatial footprint of the filtering system, or may be aligned with the axial direction, e.g. to improve a directionality of the flow through the filtering system. The fluid ports may couple the fluid channel to an internal fluid conduit system of the respective filter component, which may convey the fluid towards the filtering membrane.

The filtering membrane may in principle be selected based on the application and filtration needs and may be a polymer-based sheet, e.g. made of PTFE, with a pore size selected based on the filtration task. For bioprocess applications, the pore size of the membrane is usually at most 0.2 $\mu$m and is therefore smaller than cells. Cells in the gas flow are therefore generally unable to penetrate the filtering membrane and are filtered out of the gas flow.

The filtering membrane may be clamped between the first filter component and the second filter component, such as to intersect a fluid path through the filtering system. Each of the first filter component and the second filter component feature a filter side, which may be opposite the fluid port, which may be shaped and sized corresponding to the filtering membrane. For example, the filtering membrane may be oval, such as substantially circular, and a filter side of the first and second filter components may feature a corresponding receiving portion for receiving the filtering membrane. The filtering membrane may overlie an end face of the fluid distribution section and may feature a cross-section, which is larger than a cross-section of the end face of the fluid distribution section. As a result, the filtering membrane may prevent unimpeded flow of the fluid through the filtering system.

The filtering membrane may be clamped between the first filter component and the second filter component, wherein the filter components engage opposite sides of the filtering membrane to hold the filtering membrane in place, e.g. through a force locking engagement.

In some examples, the first filtering component and/or the second filtering component comprise/s an annular recess arranged radially outward with respect to the fluid distribution section for receiving a sealing ring for sealing a fluid stream across an interface of the first filter component and the second filter component.

**EP 4 650 037 A1**

The sealing ring may engage the filtering membrane, when the filtering membrane is held between the first filter component and the second filter component. The sealing ring may elastically engage the filtering membrane, such as to prevent tearing of the filtering membrane during clamping and to contain a fluid path from the first filter component to the second filter component inside of the filtering system, e.g. after recycling and/or replacing of the filtering membrane. For example, the sealing ring may be made of EPTM, PTFE or Silicone.

In some examples, the first and second filter components feature complementary protrusions and recesses for pinching and/or holding the filtering membrane in place.

The fluid path through the filtering system may be defined between the fluid ports of the first filter component and the second filter component. For example, the fluid port of the first filter component may be configured as a fluid inlet and the fluid port of the second filter component may be configured as a fluid outlet. The fluid may pass through the fluid distribution section comprised by the first filter component towards the filtering membrane to be filtered when passing through the filtering membrane into the second filter component. The fluid may exit the filtering system via the fluid outlet of the second filter component.

The fluid may be distributed along the fluid path over a surface area of the filtering membrane via the fluid distribution section of the first filter component. In addition, the second filter component may comprise a fluid distribution section to receive a flow of the fluid through the filtering membrane and to channel the fluid towards the fluid port of the second filter component, i.e. the fluid outlet.

The annular channel of the fluid distribution section may direct the fluid onto the filtering membrane along the axial direction, which may be substantially parallel to the surface normal of the filtering membrane. Preferably, a flow direction of the fluid through the annular channel is oriented with respect to the surface normal of the filtering membrane at an angle of less than 45°, in particular less than 30° and preferably substantially parallel to the surface normal of the filtering membrane. In contrast to filtering cartridges of the prior art, the fluid may not creep over the filtering membrane substantially perpendicular to the surface normal (i.e. along a radial direction), such as to avoid premature blockage of the filtering cartridge. Rather, the fluid distribution section may be extended in the axial direction such as to distribute a flow of the fluid over an effective surface area of the filtering membrane available for filtration, e.g. at a distance from the flexible membrane, which may be larger than a lateral dimension of the annular channel. Preferably, a thickness of the annular channel perpendicular to the primary flow direction of the fluid, e.g. along a radial direction of the filtering membrane, is smaller than a length of the annular channel along the primary flow direction defined by the geometry of the annular channel, e.g. along the axial direction of the filtering system.

The radial direction may lie in the plane of the filtering membrane and may extend from a center of the filtering membrane. Correspondingly, a circumferential direction may be aligned perpendicular to the radial direction and the axial direction.

A width of the annular channel, e.g. along the circumferential direction, may be substantially larger than the thickness of the annular channel, such as more than two times or three times, preferably more than four times larger than the thickness of the annular channel. In other words, an aspect ratio of the annular channel perpendicular to the primary flow direction through the annular channel, may be larger than two, larger than three, or larger than four, such as six or larger.

The large aspect ratio of the annular channel may enable a flow according to a sheet of fluid through the annular channel, which may enable distribution of the fluid along the circumferential direction, such as to uniformly distribute the fluid over the surface area of the filtering membrane. The sheet of fluid may be annular shaped, wherein the aspect ratio of a circumferential extension and a radial extension, perpendicular to a flow direction of the fluid, may be larger than two, larger than three, or larger than four, such as six or larger.

The cross section of the annular channel (e.g. when viewed along the axial direction) may be an annular segment, and multiple annular channels, e.g. separated by structural elements of the filtering system or by flow divider fins, may combine to form an annular channel surrounding a center of the filtering membrane. In other words, the annular channel may also be considered an annular segment channel. The annular channel may be defined between a radially inward channel wall and a radially outward channel wall, wherein a length of the radially inward channel wall may be smaller than a length of the radially outward channel wall. In some examples, the annular channel continuously surrounds a center of the filtering membrane when viewed along the axial direction.

In some examples, the fluid distribution section comprises a flow divider with a deflection element extending obliquely with respect to a surface normal of the filtering membrane, wherein the deflection element is configured to direct a fraction of a fluid stream along a fluid path to the radially outward portion of the filtering membrane comprising the annular channel.

The flow divider may divide an incoming stream of fluid from the fluid port into an axial stream of fluid towards a center of the filtering membrane and into an oblique stream of air, directed obliquely with respect to the axial direction towards a radially outward portion of the filtering membrane.

In some examples, the flow divider comprises a central tube section guiding fluid flow towards the filtering membrane along the surface normal of the filtering membrane, and the deflection element is arranged radially outward of

4

the central tube section.

For example, a fluid conduit from the fluid port may comprise and/or transition into a dual walled pipe configuration, with a central pipe section extending axially as the central conduit towards the filtering membrane, and a radially outward pipe section as an outer conduit directing the fluid onto the deflection element for guiding the fluid stream towards a radially outward portion of the filtering membrane with respect to the center of the filtering membrane. The radially outward pipe section may form or transition into the annular channel for guiding the fluid stream towards a radially outward portion of the filtering membrane.

The dual walled fluid conduit may comprise a separator wall separating the central conduit and the outer conduit, which may extend substantially along the axial direction over a length which may be greater than a width of the central conduit in the radial direction. The separator wall may smoothly transition into a deflection element deflecting the stream of fluid in the outer conduit towards a radially outward portion of the filter component. The outer conduit may transition into a radial distribution conduit along which the fluid is guided into an annular channel arranged radially outward with respect to the central conduit.

The radial distribution conduit may span more than 50% of the radius of the available surface area of the filtering membrane, such as more than 75% of the radius of the available surface area of the filtering membrane. In some examples, the radial distribution conduit guides the stream of fluid towards an outermost annular channel. In some examples, the radial distribution conduit is not directly coupled to a subset of the annular channels, such as a subset arranged within 50% of the radius of the available surface area of the filtering membrane. In some examples, a flow component of the fluid flowing towards the filtering membrane comprises a radial component flowing towards a center of the filtering membrane. For example, a flow component of the fluid flowing towards the filtering membrane from the radial distribution conduit may at least partially flow towards the center of the filtering membrane from a radially outward annular channel, e.g. arranged close to a radial edge of the available surface area of the filtering membrane.

In some examples, the deflection element directs the portion of the fluid stream towards the annular channel.

The annular channel may be arranged at a radially outward portion of the filtering system, and the deflection element may direct a flow from the fluid port towards the annular channel. The annular channel may extend from the filter side through the fluid distribution section to an upper side of the deflection element.

In some examples, the deflection element defines a conic zone directing fluid flow to the radially outward portion of the filtering membrane.

For example, the deflection element may feature a shape of a hollow frustum, wherein the upper surface of the deflection element may extend obliquely with respect to the axial direction towards the filtering membrane. The fluid may flow over the deflection element to spread the fluid along the radial direction towards a radially outward portion of the filtering membrane and/or the annular channel. In some examples, the deflection element may be substantially symmetric about a longitudinal axis of the respective components, the longitudinal axis extending along the axial direction and going through a center of the filtering membrane.

The deflection element may be arranged at an upper portion of a conic distribution section tapering along the radial direction from the longitudinal axis towards the radially outward portion of the filtering membrane and comprising a bottom side configured to face the filtering membrane.

In some examples, the fluid distribution section comprises a conic distribution section tapering from the filtering membrane towards the fluid port, the conic distribution section comprising fluid guidance channels extending through the conic distribution section along the surface normal of the filtering membrane and perpendicular to the surface normal of the filtering membrane to define sheets of fluid flow through the conic distribution section.

The fluid guidance channels may be annular channels or straight channels promoting a spread of the fluid along the radial direction and/or the circumferential direction while the fluid flows towards the filtering membrane.

In some examples, the fluid guidance section comprises radial fluid guidance channels extending from a radially inward section of the filtering membrane to a radially outward section of the filtering membrane, wherein a height of the radial fluid guidance channels along the axial direction is greater than a width of the radial fluid channels measured along a circumferential direction with respect to the axial direction and a center of the filtering membrane, and/or wherein the fluid guidance channels taper from the filtering membrane towards the fluid port.

The radial fluid guidance channels may be arranged in a star-shaped pattern, when viewed from the bottom side of the fluid guidance section, and may enable a radial flow component of the fluid away from a center of the filtering membrane. The height of the radial fluid guidance channels along the axial direction may be greater than a width of the radial fluid channels measured along a circumferential direction by a factor of two or more, such as by more than three or more, such as four or more. The radial fluid guidance channels may be arranged in the conic distribution section. A height of the radial fluid guidance channels measured along the axial direction may be greater close to the center of the filtering membrane than a height of the radial fluid guidance channels close to a perimeter of the filtering membrane, such as to promote a spread of the fluid towards radially outward portions of the filtering membrane and/or to prevent a creep of the fluid along a substantially radial direction over the filtering membrane. A median and/or average height of the radial fluid guidance channels may be greater than a width of the radial fluid channels measured along the circumferential direction.

The radial fluid guidance channels may extend over more than 50% of the radius of the available surface area of the filtering membrane for filtration measured from a center of the filtering membrane, such as more than 75%.

In some examples, the fluid guidance section comprises circumferential fluid guidance channels featuring an annular cross section, wherein a height of the circumferential fluid guidance channels along the axial direction is greater than a width of the circumferential fluid channels measured along a radial direction with respect to the axial direction and a center of the filtering membrane, and/or wherein a height of the circumferential fluid guidance channels increases from a radially outward section of the filtering membrane to a radially inward section of the filtering membrane.

The circumferential fluid guidance channels may comprise the annular channel and/or may extend in the circumferential direction from the radial fluid guidance channels to promote a spread of the fluid along the circumferential direction over the surface of the filtering membrane. The circumferential fluid guidance channels may be a plurality of annular channels. The circumferential fluid guidance channels may be arranged in the conic distribution section. The height of the circumferential fluid guidance channels in the conic distribution section may be a continuous (linear) function of the radius of the circumferential fluid guidance channel as measured from the center of the filtering membrane. The height of the circumferential fluid guidance channels along the axial direction may be greater than a width of the circumferential fluid channels measured along the radial direction by a factor of two or more, such as by more than three or more, such as four or more, at least in a portion of the fluid guidance section at half radius from the center of the filtering membrane.

A combination of the radial and circumferential fluid guidance channels may minimize a (radial) creep of the fluid over the surface of the filtering membrane and may therefore prevent premature blocking of the filtering system, e.g. due to localized accumulation of filtered matter between the filtering membrane and the respective filter component.

The radial and/or circumferential fluid guidance channels may be implemented using guiding plates extending from an inner surface of the filter component towards the filter side, e.g. from the bottom side of the fluid distribution section, for guiding a flow of the fluid between the fluid port and the filtering membrane.

In some examples, the fluid distribution section comprises annular divider plates extending axially through the fluid distribution section towards the filtering membrane for radially separating neighboring annular channels of the fluid distribution section, wherein a length of the annular divider plates optionally increases from a radially outward section of the filtering membrane to a radially inward section of the filtering membrane.

In some examples, the annular divider plates have an annular segment cross section, when viewed along the axial direction, and define circumferential gaps between each other, the circumferential gaps defining radial flow paths extending radially through the conic distribution section.

The gaps in the annular segment divider plates may be aligned for different annular divider plates at different radii, such as to form radial fluid guidance channels intersecting circumferential fluid guidance channels, which may be defined between adjacent annular segment divider plates in the radial direction. The radial flow paths may be tapering flow paths, tapering towards the perimeter of the filter component.

In some examples, the radial flow paths decrease in height from a radially inward section of the filtering membrane to a radially outward section of the filtering membrane.

The annular divider plates may support the filtering membrane when held between the first filter component and the second filter component. The annular divider plates may extend up to a bottom side of the filter component facing the filtering membrane and may commonly define an end face of the filter component overlying the filtering membrane at the filter side.

In some examples, the annular divider plates are configured for engaging the filtering membrane.

In some examples, the filtering membrane is replaceable. The filter components may be detachably connected, such that disconnecting the filter components may enable access to the filtering membrane, e.g. for replacing the filtering membrane and/or for recycling the filter components by means of a sterilization process.

In some examples, the first filter component and the second filter component comprise matching parts of a threaded connection, such that the filtering membrane is clampable between the first filter component and the second filter component by engaging the respective matching parts of the threaded connection of the first filter component and the second filter component.

According to a second aspect, a method for recycling a filtering system along a fluid channel is provided. The filtering system comprises a first filter component and a second filter component each comprising a fluid port for coupling to the fluid channel on opposite sides of the filtering system. The first filter component and the second filter component are configured for mutual engagement at a respective filter side for holding a first filtering membrane between the first filter component and the second filter component, such that the first filtering membrane is arranged in a fluid path through the filtering system between the respective fluid ports. The method comprises disconnecting the fluid ports of the filtering system from the fluid channel, separating the first filter component and the second filter component, removing the first filtering membrane, and sterilizing the first filter component and the second filter component. The method further comprises securing a second filtering membrane between the first filter component and the second filter component.

The inventors found that the filter components can be successfully sterilized, e.g. through autoclaving, and can be reused with a new or a recycled filtering membrane.

The initial (first) filtering membrane may be subjected to a sterilization or recycling process, and the (second) filtering membrane employed after sterilizing the first filter component and the second filter component may be the same filtering membrane (e.g. after a recycling process of the first filtering membrane). However, in some examples, the second filtering membrane may be a different filtering membrane, and the initial filtering membrane may be disposed of.

The method according to the second aspect may be used for recycling the filtering system of the first aspect, or any combination of examples thereof. In particular, the method may advantageously combine with and benefit from any features of the examples of the first aspect, such as a threaded or clamped connection between the filter components, and/or the fluid distribution section.

In some examples, the method comprises engaging a threaded connection of the first filter component and the second filter component for clamping the second filtering membrane between the first filter component and the second filter component.

In some examples, the method comprises clamping the first filter component and the second filter component with a clamping element, wherein the clamping element is preferably a hinge clamp with two clamping portions for engaging an outer perimeter of the first filter component and the second filter component adjacent to the second filtering membrane to clamp the second filtering membrane between the first filter component and the second filter component.

In some examples, the first filter component and the second filter component are sterilized by autoclaving.

In some examples, the method comprises inserting a sealing ring into an annular recess of the filter component prior to securing the second filtering membrane between the first filter component and the second filter component.

In some examples, the first filter component and the second filter component are sterilized prior to removing the first filtering membrane, and/or after removing the first filtering membrane, in particular after securing the second filtering membrane between the first filter component and the second filter component.

For example, the filtering system may undergo sterilization prior to disconnection from the bioreactor or pipe sections, such as to prevent contamination with filtered particles trapped inside the filtering system. Thus, the step of sterilizing the first filter component and the second filter component may further comprise sterilizing the first filtering membrane.

In some examples, the filter components are sterilized after removing the initial filtering membrane, which may be prior to or after insertion of the second filtering membrane, e.g. as part of a sterilization (e.g. autoclaving process) of a bioreactor or pipe section thereof and/or for removing contaminants introduced during assembly. Thus, in some examples, the (assembled) filtering system is sterilized after insertion of the second filtering membrane, and/or the step of sterilizing the first filter component and the second filter component may further comprise sterilizing the second filtering membrane.

In other words, the step of sterilizing the first filter component and the second filter component may be executed at different and/or multiple points during the method, e.g. depending on different implementations, such that the order of steps should not be considered limiting on the method according to the second aspect.

The skilled person will further appreciate that the examples given above are illustrated with substantially circular filtering membranes, but their features equally apply to other (two-dimensional) shapes of the filtering membrane, such as an oval or a polygonal, e.g. square or hexagonal, shape. In this case, the "radius" may be understood as the radius of an inscribed circle, e.g. a minimum distance from a center of the filtering membrane towards a perimeter of the filtering membrane.

DETAILED DESCRIPTION OF EMBODIMENTS

The features and numerous advantages of the filtering system and method according to the present invention will best be understood from a detailed description of preferred embodiments with reference to the accompanying drawings, in which:

Fig. 1          schematically illustrates an example of a filtering system for a fluid channels;

Figs. 2A-D      schematically illustrate another example of a filtering system for a fluid channel;

Figs. 3A, 3B    schematically illustrate isometric and sectional views of an example of a filtering system similar to the filtering system illustrated in Figs. 2A-2D;

Fig. 4          schematically illustrates an example of a bioreactor system including a filtering system;

Fig. 5          illustrates example results of the pressure measured in front of the filtering system as a function of time, when the filtering system and a comparative example are used to filter exhaust gases from a bioreactor;

Figs. 6A, 6B    schematically illustrate another example of a filtering system for a fluid channel; and

Fig. 7    illustrates a flowchart of an example of a method for recycling a filtering system.

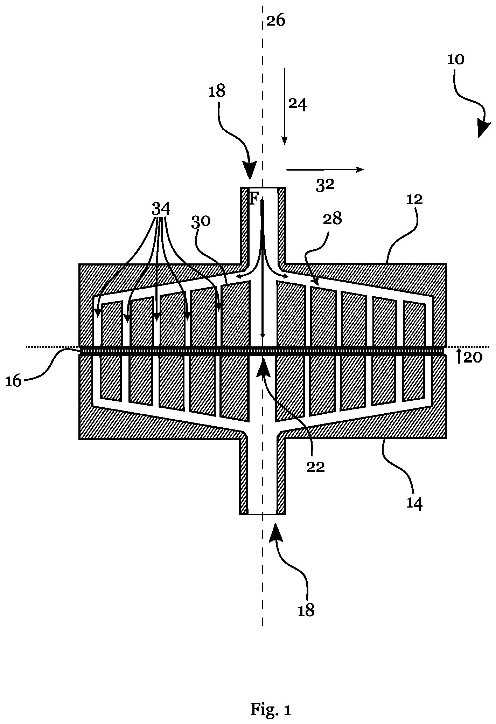

Fig. 1 schematically illustrates a cross-section of an example of a filtering system 10 for filtering a gaseous fluid stream, e.g. as part of an exhaust or supply tube of a bioreactor (not shown). The filtering system 10 comprises a first filter component 12 and a second filter component 14 configured for engaging opposite sides of a filtering membrane 16, such that the stream of the gaseous fluid passes from the first filter component 12 into the second filter component 14 through the filtering membrane 16. The filtering membrane 16 may filter particles in the gaseous fluid stream as the fluid passes the filtering membrane 16, e.g. based on a pore size of the filtering membrane 16 preventing passage of the particles, such as cellular matter. The filtering membrane 16 may be oval, e.g. circular, and may have a lateral extension of between about 4 cm and about 10 cm.

Each of the first filter component 12 and the second filter component 14 comprises a fluid port 18 for coupling to an external fluid conduit (not shown), such as tubing, and for providing access to an inner fluid passage from the fluid port 18 towards a filter side 20 of the respective filter components 12, 14 (illustrated in Fig. 1 for the first filter component 12) facing the filtering membrane 16.

In Fig. 1 an inbound flow F of the fluid enters the first filter component 12 via the fluid port 18 of the first filter component 12 (fluid inlet) and is guided towards a center of the filtering membrane 16 through a central fluid conduit 22 along an axial direction 24 substantially parallel to a surface normal of the filtering membrane 16 (the filtering membrane 16 extending into the plane of projection in Fig. 1). The central fluid conduit 22 is aligned with a longitudinal axis 26 of the filtering system 10, which is aligned with the axial direction 24 and goes through a center of the filtering membrane 16. The fluid passes through the filtering membrane 16 into the second filter component 14 and exits the second filter component 14 via the fluid port 18 of the second filter component 14 (fluid outlet).

As shown in the example of Fig. 1, the first filter component 12 and the second filter component may be mirror symmetric with respect to the filter membrane 16, such that corresponding fluid paths of the first filter component 12 and the second filter component 14 may overlap, when the first filter component 12 and the second filter component 14 hold a filtering membrane 16 between each other. However, in some examples, the second filter component 14 may only partially mirror the geometry of the first filter component 12, such as a location and/or cross-section of the central conduit 22.

In addition to the central conduit 22, the first filter component 12 comprises a radial distribution conduit 28 branching off from the central conduit 22 to direct a portion of the flow F towards a radially outward portion of the first filter component 12. The radial distribution conduit 28 comprises a deflection element 30 proximate the central conduit 22 for directing the flow F of the fluid towards the radially outward portion of the first filter component 12. In Fig. 1, the deflection element 30 comprises an inclined surface extending towards the central conduit 22 at an angle, which is tilted with respect to the axial direction 24, e.g. an angle between about 10° and about 85°, such as between about 30° and 80°, for example, 75° or 60°.

Thus, the fluid may be guided at least partially along a radial direction 32 perpendicular to the axial direction 24 and extending from the longitudinal axis 26 of the filtering system 10.

The radial distribution conduit 28 may comprise radial conduits, extending along the radial direction and comprising circumferential walls sectioning the radial distribution conduit 28 into a plurality of separate flow channels along the circumferential direction (which extends into the plane of projection in Fig. 1). In some examples, the deflection element 30 comprises a conic lateral surface, and at least a portion of the radial distribution conduit 28 may extend continuously around the central conduit 22. In some examples, the deflection element 30 is connected to an upper portion of the first component 12 through struts and/or fins for continuously and/or intermittently separating circumferential segments of the radial distribution conduit 28.

The first filter component 12 further comprises annular channels 34 extending from the radial distribution conduit 28 towards the filtering membrane 16 substantially along the axial direction 24. The annular channels 34 feature a thickness along the radial direction 32, which is smaller than a length along an extension direction between the radial distribution conduit 28 and the filtering membrane 16. For example, the thickness of the annular channel 34 may be smaller than a dimension of the annular channel 34 along the axial direction 24. In addition, the thickness of the annular channel 34 may be smaller than a width of the annular channel 34 in the circumferential direction.

The annular channel 34 may be a cavity in the first filter component 12 with a cross section of an annular segment, when viewed along the axial direction 24, for guiding a flow of the fluid towards the filtering membrane 16 with a flow velocity of the flow at an angle of 60° or less, usually 45 or 30° or less, with respect to the axial direction 24 such as substantially along the axial direction 24, when viewed in a side cross section through the center of the filtering system 10, as in Fig. 1. At the same time, the fluid may spread in a direction perpendicular to the radial direction 32 (e.g. along the circumferential direction), to distribute the flow of the fluid circumferentially over the surface of the filtering membrane 16 acting effectively as circumferential distribution channels.

As in the example of Fig. 1, a plurality of annular channels 34 may be distributed over different radii from the longitudinal axis 26, e.g. evenly spaced along the radial direction 32 of the filtering membrane 16. The annular channels 34 may form a fluid distribution section, allowing the fluid to advance towards the filtering membrane 16 at a distance, which is greater than the thickness of the annular channel 34, while the fluid can be distributed over the surface area of the filtering membrane 16.

The fluid distribution section may feature a (conical) frustum shape tapering towards the perimeter of the filtering membrane 16. For example, the fluid distribution section may taper in accordance with an inclination of the radial distribution conduit 28/deflection element 30 towards the radially outer edge of the accessible surface of the filtering membrane 16 for filtration.

The annular channels 34 may vary in height in accordance with a tapering of the fluid distribution section, e.g. in accordance with an inclination of the radial distribution conduit 28/deflection element 30. As a result, a height of the annular channels 34 may decrease with increasing radius from a center of the filtering membrane 16.

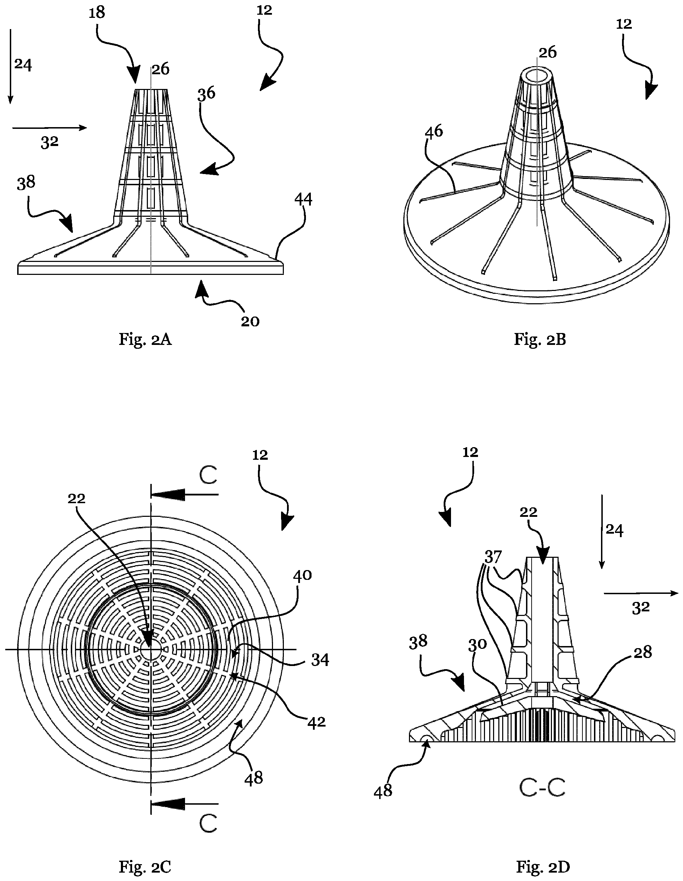

Figs. 2A-2D illustrate another example of a filter component 12 for a filtering system 10 as shown in Fig. 1, e.g. when combined with a corresponding (second) filter component 14 as the one shown in Figs. 1-2D and a filtering membrane 16. Fig. 2A shows a side view of the filter component 12, Fig. 2B illustrates an isometric view of the filter component 12, Fig. 2C illustrates a bottom view of the filter component 12, and Fig. 2D illustrates a sectional side view through a center of the filter component 12 (along the section line C-C illustrated in Fig. 2C).

The filter component 12 comprises a fluid port 18 arranged in a coupling section 36 of the filter component 12 at an upper side of the filter component 12 and protruding substantially along the axial direction 24 of the filter component 12. The coupling section 36 comprises alternating protrusions 37 and recesses for engagement with flexible tubing (not shown) pulled over the coupling section 36. The fluid port 18 is in fluid communication with a central conduit 22 inside the filter component 12 for directing an incoming flow F of fluid (not illustrated in Figs. 2A-2D) towards the filtering membrane 16 along the axial direction 24.

The filter component 12 may feature a fluid distribution section 38 between the fluid port 18 and a filter side 20 at the bottom of the filter component 12, the fluid distribution section 38 featuring a (conic) frustum shape widening along the axial direction 24 towards the filtering membrane 16. The fluid distribution section 38 comprises a deflection element 30, which may be arranged close to an interface between the coupling section 36 and the fluid distribution section 38, wherein the deflection element 30 comprises a central aperture aligned with the central conduit 22 for enabling flow F of the fluid through the deflection element 30 along the axial direction 24 and an inclined surface, inclined with respect to the axial direction 24, for directing a fraction of the fluid towards a radially outward portion of the filter component 12.

The fluid distribution section 38 further comprises a plurality of annular plates 40 protruding towards the filter side 20 with ends overlying and potentially engaging the filtering membrane 16 in a filtering system 10. The annular plates 40 feature a cross section of an annular segment, when viewed along the axial direction 24, as shown in Fig. 2C, and are distributed along the radial direction 32 of the filter component 12 for defining annular channels 34 between adjacent annular plates 40.

In addition, the annular plates 40 feature circumferential gaps between the annular plates 40 in different circumferential segments of the fluid distribution section 38 for defining radial distribution channels 42 extending along the radial direction 32 through the fluid distribution section 38. A plurality of radial distribution channels 42 are arranged in the fluid distribution section 38 at different angles, forming a substantially star-like pattern of radial distribution channels 42.

The fluid distribution section 38 tapers from the longitudinal axis 26 along the radial direction 32. In accordance with a taper of the fluid distribution section 38, the length of the annular plates 40 is reduced as the radius is increased, such that the annular channels 34 may feature a diminishing length as a function of the radius at which the annular channel 34 is located in the fluid distribution section 38. Further, the radial distribution channels 42 may reduce in height as a function of the radius from a center of the filtering membrane 16/filter component 12.

As a result, a further fraction of the fluid passing through the aperture of the deflection element 30 may be distributed along the radial direction 32 through the radial distribution channels 42 and circumferentially via the annular channels 34 with a fluid velocity component along the axial direction 24, e.g. to facilitate a spread of the fluid over the filtering membrane 16.

As illustrated in Fig. 2A, the filter component 12 may feature a clamping section 44 arranged at an upper surface of the filter component 12, e.g. above the fluid distribution section 38. The clamping section 44 may be configured for engagement with a clamping means for clamping corresponding filter components 12, 14 with a clamping element, in particular a hinge clamp (not shown) with two hinged clamping portions engaging opposite sides of the clamping section 44 and clamping a filtering membrane 16 between the filter components 12,14, when the hinge clamp is tightened, e.g. with an adjustment screw. As shown in Fig. 2A, the clamping section 44 may feature a notched profile for guiding a placement of the clamping portions.

In addition, the filter component 12 may comprise webs 46 extending along the radial direction 32 over the upper surface of the filter component 12, and optionally over sides of the coupling section 36, for strengthening the filter component, e.g. against a clamping strain.

As shown in Figs. 2C, 2D, the filter component 12 may feature an annular recess 48 in a radially outward section of the filter component 12 at the filter side 20. The annular recess 48 continuously extends around the circumference of the filter component 12 and may be configured to receive a sealing ring (not shown) for sealing a radially inward space of the filtering system 10. Specifically, the sealing ring in the annular recess 48 may engage the filtering membrane 16, when the first and second filter components 12, 14 clamp a filtering membrane 16 between each other, to prevent the fluid from leaving an internal fluid path of the filtering system 10. The sealing ring may provide a limiting edge in the radial direction 32 for restricting the fluid towards a space radially inward from the annular recess 48.

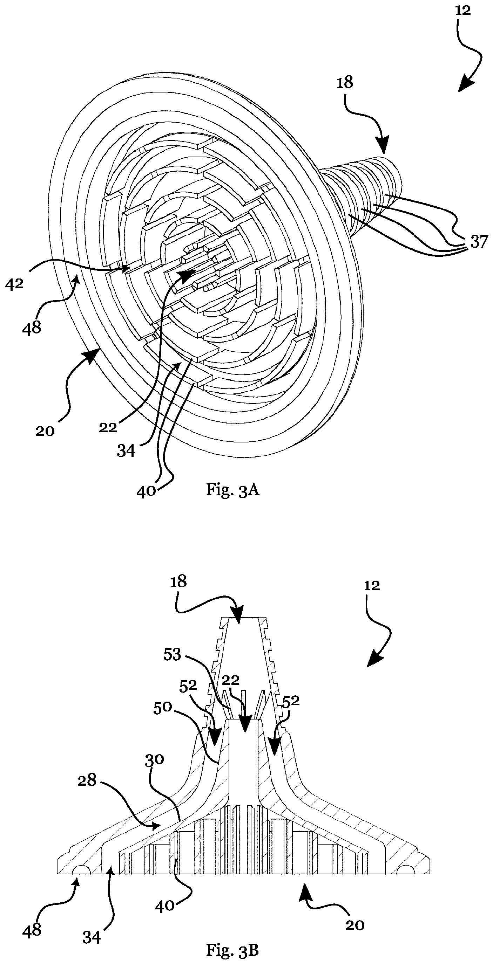

Fig. 3A, 3B illustrate further views of a filter component 12 similar to the filter component 12 illustrated in Fig. 2A-2D, wherein Fig. 3A illustrates an isometric view of the filter side 20 of the filter component 12 and Fig. 3B illustrates a sectional view through a center of the filter component 12.

The illustrated example shown in Fig. 3B features a double walled inner conduit with a separator wall 50 separating an inner central conduit 22 and an outer conduit 52 along the radial direction. The double walled inner conduit with the separator wall 50 separating the central conduit 22 and the outer conduit 52 extends substantially along the axial direction 24 over a length which may be greater than a width of the central conduit 22 in the radial direction 32. The separator wall 50 is supported by fin-like struts 53 extending between an outer shell of the filter component 12 and the separator wall 50. As in the illustrated example, the fin-like struts 53 may section the outer conduit 52 along the circumferential direction, when viewed along the axial direction 24, such as to define multiple segments of the outer conduit 52, with a substantially annular cross section.

The separator wall 50 smoothly transitions into a deflection element 30 deflecting the stream of fluid in the outer conduit 52 towards a radially outward portion of the filter component 12. As shown in Fig. 3B, the outer conduit 52 may transition into a radial distribution conduit 28 along which the fluid is guided into an annular channel 34 arranged radially outward with respect to the central conduit 22. In the example of Fig. 3B, the radial distribution conduit 28 smoothly transitions into one of the annular channels 34. Moreover, as shown in Fig. 3B, the radial distribution conduit 28 may pass over a portion of the annular channels 34 along the radial direction 32. At least one of the annular channels 34 may extend from the filter side 20 through the fluid distribution section 38 to an upper side of the deflection element 30 and/or into the radial distribution conduit 28.

Similar to the configuration of the coupling section 36, the deflection element 30 may be supported on the top portion of the outer shell of the filter component 12 by means of fin-like struts 53, which may continuously extend from the double walled conduit section in the coupling section 36 into the radial distribution conduit 28.

As illustrated in Fig. 3B, the separator wall 50 and the deflection element 30 may be smoothly connected and/or integrally formed, wherein a cross-section of the lateral walls of the outer conduit 52 and the radial distribution conduit 28 may be a continuous function of the radius of the filter component 12. The smooth lateral walls of the outer conduit 52 and the radial distribution conduit 28 may avoid turbulence in the filter component 12 and improve fluid flow towards the radially outward portion of the filter component 12.

The filter component 12 may be formed integrally, e.g. through an additive manufacturing process or of multiple pieces joined together, e.g. two pieces, such as a housing forming an outer shell and a fluid distribution section 38 including the separator wall 50 and the deflection element 30, which may be joined, e.g. through welding or gluing, wherein a structural connection point may be formed by the fin-like struts 53.

In some examples, the double walled conduit section divides a flow of the fluid from the fluid port 18 into a central stream through the central conduit 22 and an outer stream through the outer conduit 52 towards the radially outward portion of the filter component 12. In some examples, a fraction of 10-50% of the fluid stream is diverted into the outer conduit 52. For example, the central conduit 22 may direct 66% of the fluid stream towards the filtering membrane 16, while the outer conduit 52 may direct a remaining 34% of the fluid stream towards the filtering membrane 16.

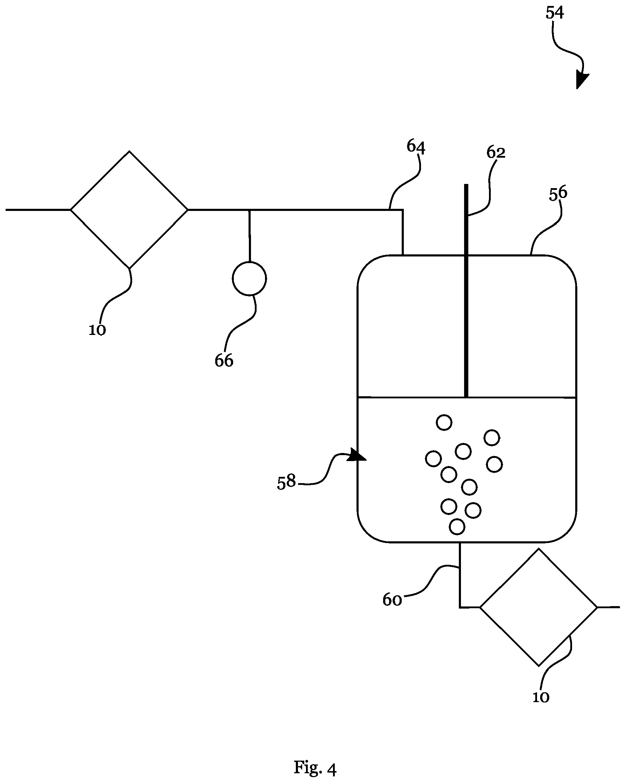

Fig. 4 illustrates an example of bioreactor system 54 for a filtering system 10. The bioreactor system 54 comprises a bioreactor 56 containing biomass 58 undergoing a reaction. An inlet pipe 60 is connected to the bioreactor 56 for supplying a fluid to the bioreactor 56, e.g. a gaseous stream containing oxygen and/or nitrogen and/or carbon dioxide to the biomass 58. The bioreactor 56 comprises a stirring component 62 for mixing the biomass 58. An exhaust pipe 64 withdraws a gaseous exhaust fluid near a top portion of the bioreactor 56. The exhaust pipe 64 is coupled to a filtering system 10 for filtering exhaust gases exiting the bioreactor 56. A further filtering system 10 is provided at the inlet pipe 60 to filter supply gas for the bioreactor 56, wherein the filtering system 10 at the inlet pipe 60 may be identical to the filtering system 10 coupled to the exhaust pipe 64. A pressure meter 66 is coupled to the exhaust pipe 64 between the bioreactor 56 and the filtering system 10 for measuring a pressure of the exhaust pipe 64 before the exhaust fluid passes the filtering system 10.

Using the bioreactor system 54 of Fig. 4, a filtering system 10, similar to the filtering system illustrated in Fig. 1 was investigated as an exhaust filter. The filtering system 10 comprises identical first and second filter components 12, 14 as shown in the example of Fig. 2A-2D and a circular PTFE filtering membrane 16 having a diameter of 47 mm and a pore size of 0.2 $\mu$m, wherein the effective filter area is approx. 17.35 cm$^3$ which is clamped between the filter components 12, 14 using a hinge clamp (Example 1).

The filtering system 10 was compared to a commercially available filter cartridge with a PTFE membrane with a diameter of 64 mm and a pore size of 0.2 $\mu$m available from the company Sartorius$^®$ with an effective filter area of 32.17 cm³ (Sartorius® MediSart® 2000 0,2 μm, Comparative example). The key characteristics of the two filters are compared in Table 1.

Table 1

|  | Comparative example | Example 1 |
| --- | --- | --- |
| Diameter | 64 mm | 47 mm |
| Filter material | PTFE | PTFE |
| Pore size | 0.2 μm | 0.2 μm |
| Filter area | 32.17 cm³ | 17.35 cm³ |

For the experiment, the filters were connected one after the other to a bioreactor 56 containing biomass 58, for a fermentation process with an *E. coli*-strain. The stirring rate of the stirring element 62 was set to 450 rpm, the temperature to 30°C and the aeration to 3000 ccm/min. The pressure measured at the pressure meter 66 was recorded for 16 h for both filters. The pressure difference was calculated between the pressure before the filter and the environment.

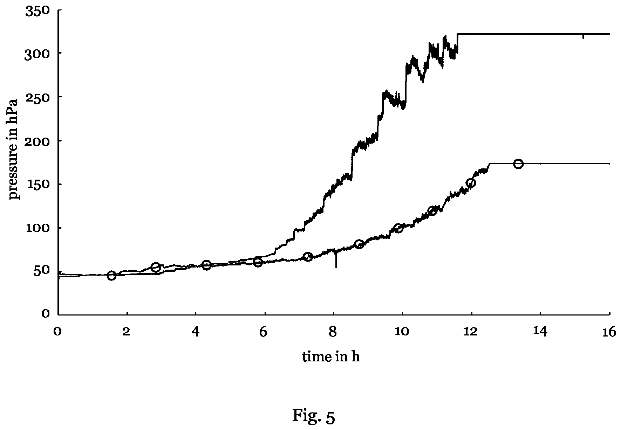

Fig. 5 illustrates data from the experiment with the pressure data for the comparative example and Example 1 (indicated with open circles spaced along the data points) provided as solid lines as a function of the time of the experiment. As the filter areas are different, the measured pressure for Example 1 is rescaled based on the ratio of the filter area of the comparative filter and Example 1 according to

$$p_{rescaled} = p_{original} \frac{A_{Example\ 1}}{A_{comparative\ example}}.$$

For both filters, the pressure meter 66 saturates at a pressure of approx. 320 hPa. However, for the filtering system 10 according to Example 1, the pressure saturates later than in the comparative example. Moreover, as can be seen in Fig. 5, the rate of pressure increases as a function of time, when rescaled for the same effective filter area, rises significantly slower than in the comparative example, indicating that the comparative example might prematurely block.

The inventors attribute the improvement to the optimized fluid distribution section 38. As a result, the filtering system 10 may be used for longer time periods, e.g. for reducing the amount of maintenance on the filtering system and/or without increasing the amount of waste material.

The effectiveness of the filtering system 10 was investigated by guiding the exhaust gas stream from the filtering system 10 through a culturing solution, which was sterilized before, and confirming a lack of bacteria growth.

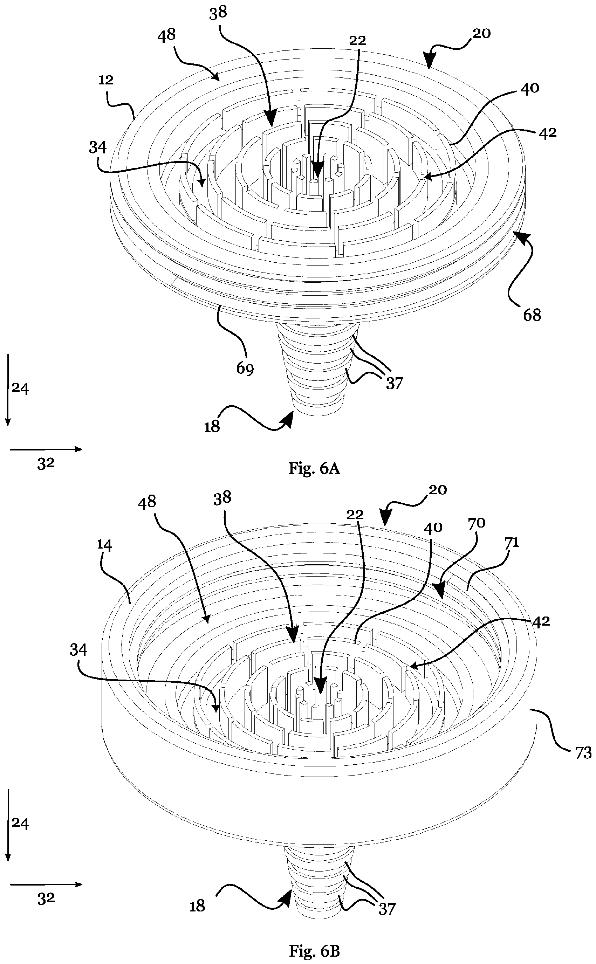

Figs. 6A, 6B illustrate a further example of a filtering system 10 with a threaded coupling geometry between the filter components 12, 14, which may feature any of the features of the previous examples illustrated in Figs. 1-3B, and the description of corresponding features is not repeated. Fig. 6A illustrates an isometric view of a first filtering component 12 of the filtering system 10, while Fig. 6B illustrates an isometric view of a second filtering component 14 of the filtering system 10.

In the illustrated example, the first filter component 12 and the second filter component 14 feature complementary engagement means 68, 70 for clamping a filtering membrane 16 (not shown) between each other. Specifically, the first filter component 12 and the second filter component 14 comprise a male threaded section 68 and a female threaded section 70, respectively, arranged close to their respective radial perimeter.

The first filter component 12 features the male threaded section 68 at a radially outward facing side of the first filter component 12, and features a slot 69 extending spirally over a radial outer surface of the first filter component 12 as part of a threaded connection between the first filter component 12 and the second filter component 14. The slot 69 extends substantially over a length of the annular channels 34.

The second filter component 14 features the female threaded section 70 arranged at a radially inward facing section of a cylindrical wall 72 of the second filter component 14 and comprises a radially inward protruding ridge 71 spirally extending from the filter side 20 along the axial direction 24, the cylindrical wall 72 radially enclosing a receiving space over the fluid distribution section 38 of the second filter component 14 and extending along the axial direction 24 from the filter side 20 of the second filter component 14.

When the first filter component 12 and the second filter component 14 are engaged with each other through the threaded connection, e.g. through engagement of the radially inward protruding ridge 71 with the slot 69 with a relative screwing motion moving the radially inward protruding ridge 71 along the slot 69, the filter side 20 of the first filter component 12 approaches a longitudinal end of the fluid distribution section 38 of the second filter component 14, while the first filter component 12 moves into the receiving space defined by the cylindrical wall 72, and can be held in place by the cylindrical wall 72.

Thus, the first filter component 12 and the second filter component 14 may be connected via a threaded connection by engaging the respective threaded sections 68, 70 and screwing the first filter component 12 into the second filter component 14.

The engagement of the first filter component 12 and the second filter component 14 via the threaded connection may clamp a filtering membrane 16 between the first filter component 12 and the second filter component 14. The filtering membrane 16 may be introduced into the receiving space defined by the cylindrical wall 72, and the first filter component 12 may engage the filtering membrane 16, when the first filter component 12 is screwed into the second filter component 14.

The skilled person will appreciate that any one of the first filter component 12 and second filter component 14 may be associated with the fluid inlet, while the other may act as a fluid outlet. Moreover, although the female threaded section 70 is implemented with a radially inward protruding ridge 71 and the male threaded section 68 is implemented with a radially outward facing slot 69, the female threaded section 70 may equally be implemented with a radially inward facing slot 69, while the male threaded section 68 may feature a radially outward protruding ridge 71. As in the illustrated example, each of the first filter component 12 and the second filter component 14 may be integrally formed with the respective male and female threaded sections 68, 70.

As further illustrated in Figs. 6A, 6B, the first filter component 12 and the second filter component 14 can each comprise an annular recess 48 for receiving a sealing ring (not shown), which may engage and press the filtering membrane 16 against a surface of the second filter component 14, and which may reduce shear forces on the filtering membrane 16, when the filtering membrane 16 is held between the first filter component 12 and the second filter component 14. In the illustrated example, both the first filter component 12 and the second filter component 14 feature an annular recess 48 facing the sealing ring, e.g. for improving a sealing effect. However, in some examples, the surface of the second filter component 14 or the first filter component 12 facing the sealing ring/the annular recess 48 of the other filter component 12, 14 is substantially flat. The sealing ring may be formed as a torus with a core portion fitting into the annular recess(es) 48 for sealing a fluid path through the filtering system 10. In some examples, the sealing ring may be further provided with a radially extending flap, e.g. extending radially inward and/or outward, such as to lie on a flat portion of the first filter component 12 and/or the second filter component 14 in an assembled state of the filtering system 10, or may be entirely formed of a flat toroidal body with a rectangular cross section.

In some examples, an extension of the annular plates 40 of the second filter component 14 along the axial direction 24 may be smaller than an extension of the annular plates 40 of the first filter component 12 along the axial direction 24, or vice-versa. As a result, the length along the axial direction 24 of the radial distribution channels 42 in the second filter component 14 may be smaller than a length of the radial distribution channels 42 in the first filter component 12, or vice-versa, wherein a fluid distribution over the surface area of the filtering membrane 16 is preferably prioritized at the inlet side of the filtering system 10, e.g. at the first filter component 12 or the second filter component 14, depending on which filter component 12, 14 is associated with the fluid inlet side.

In addition to an improved fluid distribution over the surface area of the filtering membrane 16, the fluid distribution section 38 may improve fluid flow through the filter components 12, 14, which may enable recycling of the filter components 12, 14 by means of a sterilizing process, such as autoclaving. Thus, as opposed to the single-use filter cartridges of the prior art, the filtering system 10 may be recycled for repeated use and may thus reduce waste.

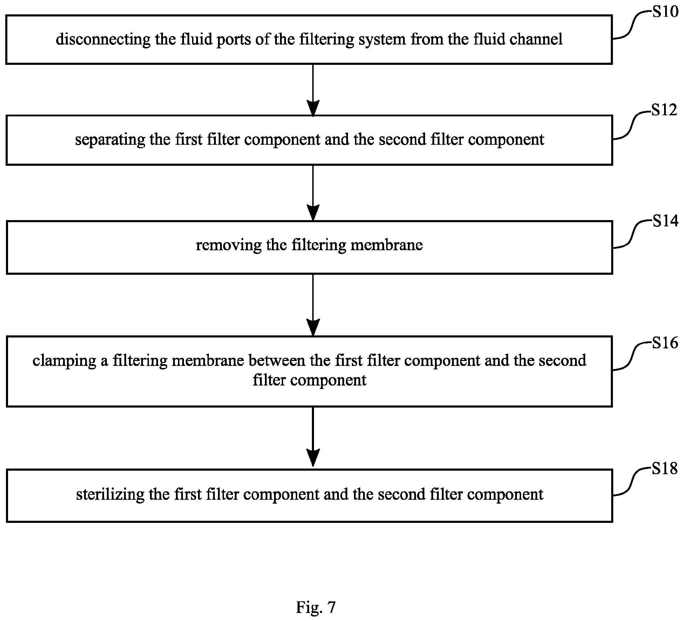

Fig. 7 illustrates a flowchart of an example of a method for recycling a filtering system 10. The method comprises disconnecting the fluid ports 18 of the filtering system 10 from a fluid channel 60, 64 (S10), and , and separating the first filter component 12 and the second filter component 14 (S12). The method further comprises removing the filtering membrane 16 (S14), and securing a filtering membrane 16 between the first filter component 12 and the second filter component 14 (S16). The method further comprises sterilizing the first filter component 12 and the second filter component 14 (S18).

The filter components 12, 14 may be separated by disengaging a hinge clamp from the perimeter of the filter components 12, 14 at their respective filter side 20, enabling access to the filtering membrane 16, which can be removed and disposed of. Alternatively, the filtering membrane 16 may be individually sterilized and recycled. The first filter component 12 and the second filter component 14 may be sterilized by autoclaving, e.g. by passing a heated vapor through the filter components, 12, 14, which may be enabled by the improved flow path inside of the filter components 12, 14. In some examples, the filtering membrane 16 is removed prior to sterilizing the first filter component 12 and the second filter component 14. However, sterilizing the filtering system 10 prior to removing the filtering membrane 16 may minimize a risk of contamination due to filtered matter. In some examples, the filtering system 10 is subjected to sterilization prior to removal from the bioreactor system 54 or a pipe section thereof. In some examples, the first filter component 12 and the second filter component 14 are sterilized after removal of the initial (first) filtering membrane 16 and prior to insertion of a new (second) filtering membrane 16.

Subsequently, the recycled or a new filtering membrane 16 can be inserted between the filter components 12, 14 and clamped to provide a recycled filtering system 10. A sealing ring for sealing a fluid path through the filter components 12, 14 and the filtering membrane 16 may be recycled with the filter components 12, 14, e.g. removed from the annular recess 48 and sterilized by autoclaving.

In some examples, the (second) filtering membrane 16 is sterilized after assembly of the filtering system 10, e.g. in addition or as an alternative to a previous sterilization of the filter components 12, 14, such as to prepare the filtering system 10 for reuse.

For example, a process sequence part of recycling the filtering system 10 may comprise the steps of: sterilization of the filtering system 10 by autoclaving, removal of the filtering system 10 from the bioreactor system 54, disassembly of the filtering system 10, separation of the first and second filter components 12, 14, and removal of the filtering membrane 16 from the filtering system 10. As another example, e.g. prior to a fermentation process, a process sequence may comprise the steps of: separation of the first and second filter components 12, 14, insertion of a filtering membrane 16 between the first and second filter components 12, 14, connection of the first and second filter components 12, 14, e.g. via clamping, connection to a bioreactor system 54, and sterilization of the assembled filtering system 10 by autoclaving.

To test the ability of removing contaminants from the filter components, a fermentation process with an *E. coli* strain, 40 g/L glucose as C-source, and a defined medium was carried out in two bioreactors 56 operated in parallel, with a first bioreactor 56 coupled to a conventional filter cartridge from the company Sartorius® and a second bioreactor 56 coupled to a filtering system 10 as described above in conjunction with Fig. 6A-6E (Example 2). The bioreactors 56 were constantly gassed with 2 vvm (volume of air sparged per unit volume of growth medium per minute, e.g. based on the airflow rate divided by the volume of growth medium) air for 24 hours (Experiment 1). The filters were used to filter the incoming supply gas stream as well as the exhaust stream.

Both gas filters showed significant clogging after the end of the fermentation process, so that they could no longer be used for further fermentation. The conventional filter cartridge had to be disposed of as $S_1$ waste.

The filtering system 10 according to Example 2 showed a similarly strong blockage. However, as the filtering membrane 16 is replaceable by unscrewing the first filter component 12 from the second filter component 14, it could be replaced and the filtering system 10 can be used for further fermentations.

After the fermentation process, the filtering system 10 according to Example 2 was prepared for reuse as follows:

1. autoclaving of the filtering system 10 in a Systec® stand-alone autoclave VX150 for 20 minutes at 121 °C.

2. opening the housing by disconnecting the first filter component 12 and the second filter component 14 and replacing the filtering membrane 16 under a sterile bench.

3. resealing the housing, by connecting the first filter component 12 and the second filter component 14.

Subsequently, another fermentation process with *E. coli* was carried out under identical conditions as described above with the recycled filtering system 10 and a new filtering membrane 16 (Experiment 2). Identical results as in the initial deployment of the filtering system 10 were obtained.

To assess the filtering effectiveness, the fermentation broths from Experiment 1 and using the recycled filtering system 10 in Experiment 2 were examined microscopically. In each case, no contamination (e.g. by an airborne pathogen) could be detected. This shows that the supply air filters did not allow any airborne germs to pass through and therefore remain effective after recycling.

The exhaust air from the fermentations in Experiments 1 and 2 was also passed through a pre-sterilized culture medium for *E. coli* arranged behind the exhaust air filtering system 10. No bacteria growth could be detected, which indicates that no *E. coli* cells passed through the exhaust air filter in both cases (original and recycled).

In the examples, the central conduit 22 is illustrated as a cylindrical void in the filter component 12, 14. However, in some examples the central conduit 22 may equally comprise sectioning members, such as struts or fins, e.g. to increase a stability of the filter component, such as a cross shaped support structure supporting the central conduit 22, when viewed along the axial direction 24.

Moreover, although the examples show the annular channels 34 of the filter components 12, 14 with a cross section of an annular segment or annulus, when viewed along the axial direction 24, the annular channels 34 may equally be formed by segments of an approximated circle, such as segments of a polygon approximating a circle, e.g. a hexagon or an octagon. For example, radial channels may extend along the radial direction 32, and the annular channels may extend substantially straight in a direction perpendicular to the radial channel such as to form a segment of a polygon approximating a circle. A plurality of annular channels 34 distributed along different radii from the longitudinal axis 26 may then commonly form Christmas tree like shapes, with different annular channels 34 extending in width along the radial direction 32.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

10    filtering system
12    first filter component
14    second filter component
16    filtering membrane
18    fluid port
20    filter side
22    central conduit
24    axial direction
26    longitudinal axis
28    radial distribution conduit
30    deflection element
32    radial direction
34    annular channel
36    coupling section
38    fluid distribution section
40    annular plates
42    radial distribution channels
44    clamping section
46    web
48    annular recess
50    separator wall
52    outer conduit
53    struts
54    bioreactor system
56    bioreactor
58    biomass
60    inlet pipe
62    stirring means
64    exhaust pipe
66    pressure meter
68    male threaded section
69    slot
70    female threaded section
71    ridge
72    cylindrical wall

**Claims**

1.  A filtering system (10) for a fluid channel (60, 64) comprising

    a first filter component (12) and a second filter component (14) each comprising a fluid port (18) for coupling to the fluid channel (60, 64) on opposite sides of the filtering system (10),
    wherein the first filter component (12) and the second filter component (14) are configured for mutual engagement at a respective filter side (20) for holding a filtering membrane (16) between the first filter component (12) and the second filter component (14), such that the filtering membrane (16) is arranged in a fluid path through the filtering system (10) between the respective fluid ports (18);
    wherein the first filter component (12) and/or the second filter component (14) comprise/s a fluid distribution section (38) arranged between the filtering membrane (16) and the respective fluid port (18), and
    wherein the fluid distribution section (38) comprises a central conduit (22) arranged to direct a fluid towards a center of the filtering membrane (16) along an axial direction (24) of the filtering system (10) and an annular channel (34), arranged radially outward with respect to the central conduit (22), for guiding the fluid towards a radially outward portion of the filtering membrane (16) with a fluid flow component along the axial direction (24).

2.  The filtering system (10) of claim 1, wherein the annular channel (34) is configured for guiding a sheet of fluid towards the filtering membrane (16), wherein a thickness of the annular channel (34) along a radial direction (32) is in particular smaller than an extension of the annular channel (34) along the axial direction (24) of the filtering system (10), and/or wherein an angle between a flow direction through the annular channel (34) and the axial direction (24) is in particular smaller than 60°, such as smaller than 45° or smaller than 30°.

3. The filtering system (10) of claim 1 or 2, wherein the fluid is a gas, in particular an exhaust gas from a bioreactor (54, 56, 58) or a supply gas for a bioreactor (54, 56, 58).

4. The filtering system (10) of any one of the preceding claims, wherein the fluid distribution section (38) comprises a flow divider with a deflection element (30) extending obliquely with respect to a surface normal of the filtering membrane (16), wherein the deflection element (30) is configured to direct a fraction of a fluid stream along a fluid path to the radially outward portion of the filtering membrane (16) comprising the annular channel (34);

wherein the deflection element (30) in particular directs the portion of the fluid stream towards the annular channel (34); and/or
wherein the flow divider comprises a central tube section guiding fluid flow towards the filtering membrane (16) along the surface normal of the filtering membrane (16), and the deflection element (30) is arranged radially outward of the central tube section.

5. The filtering system (10) of claim 4, wherein the deflection element (30) defines a conic zone directing fluid flow to the radially outward portion of the filtering membrane (16).

6. The filtering system (10) of any one of the preceding claims, wherein the fluid distribution section (38) comprises a conic distribution section tapering from the filtering membrane (16) towards the fluid port (18), the conic distribution section comprising fluid guidance channels extending through the conic distribution section along the surface normal of the filtering membrane (16) and perpendicular to the surface normal of the filtering membrane (16) to define sheets of fluid flow through the conic distribution section.

7. The filtering system (10) of any one of the preceding claims, wherein the fluid distribution section (38) comprises radial fluid guidance channels (42) extending from a radially inward section of the filtering membrane (16) to a radially outward section of the filtering membrane (16), wherein a height of the radial fluid guidance channels (42) along the axial direction (24) is greater than a width of the radial fluid channels (42) measured along a circumferential direction with respect to the axial direction (24) and a center of the filtering membrane (16), and/or wherein the fluid guidance channels (42) taper from the filtering membrane (16) towards the fluid port (18).

8. The filtering system (10) of any one of the preceding claims, wherein the fluid distribution section (38) comprises circumferential fluid guidance channels (34) featuring an annular cross section, wherein a height of the circumferential fluid guidance channels (34) along the axial direction (24) is greater than a width of the circumferential fluid channels (34) measured along a radial direction (32) with respect to the axial direction (24) and a center of the filtering membrane (16) and/or wherein a height of the circumferential fluid guidance channels (34) increases from a radially outward section of the filtering membrane (16) to a radially inward section of the filtering membrane (16).

9. The filtering system (10) of any one of the preceding claims, wherein the fluid distribution section (38) comprises annular divider plates (40) extending axially through the fluid distribution section (38) towards the filtering membrane (16) for radially separating neighboring annular channels (34) of the fluid distribution section (38), wherein a length of the annular divider plates (40) optionally increases from a radially outward section of the filtering membrane (16) to a radially inward section of the filtering membrane (16).

10. The filtering system (10) of claim 9, wherein the annular divider plates (40) have an annular segment cross section, when viewed along the axial direction (24), and define circumferential gaps between each other, the circumferential gaps defining radial flow paths (42) extending radially through the conic distribution section;

wherein the radial flow paths (42) in particular decrease in height from a radially inward section of the filtering membrane (16) to a radially outward section of the filtering membrane (16); and/or
wherein the annular divider plates (40) are configured for engaging the filtering membrane (16).

11. The filtering system (10) of any one of the preceding claims, wherein the first filter component (12) and/or the second filter component (14) comprises an annular recess (48) arranged radially outward with respect to the fluid distribution section (38) for receiving a sealing ring for sealing a fluid stream across an interface of the first filter component (12) and the second filter component (14); and/or
wherein the first filter component (12) and the second filter component (14) comprise matching parts of a threaded connection, such that the filtering membrane (16) is clampable between the first filter component (12) and the second filter component (14) by engaging the respective matching parts (68) of the threaded connection of the first filter component (12) and the second filter component (14).

12. A method for recycling a filtering system (10) along a fluid channel (60, 64),

the filtering system (10) comprising a first filter component (12) and a second filter component (14) each comprising a fluid port (18) for coupling to the fluid channel (60, 64) on opposite sides of the filtering system (10), wherein the first filter component (12) and the second filter component (14) are configured for mutual engagement at a respective filter side (20) for holding a first filtering membrane (16) between the first filter component (12) and the second filter component (14), such that the first filtering membrane (16) is arranged in a fluid path through the filtering system (10) between the respective fluid ports (18),
wherein the method comprises:

disconnecting the fluid ports (18) of the filtering system (10) from the fluid channel (60, 64);
separating the first filter component (12) and the second filter component (14);
removing the first filtering membrane (16);
sterilizing the first filter component (12) and the second filter component (14); and
securing a second filtering membrane (16) between the first filter component (12) and the second filter component (14).

13. The method of claim 12, wherein the method comprises engaging a threaded connection of the first filter component (12) and the second filter component (14) for clamping the second filtering membrane (16) between the first filter component (12) and the second filter component (14); and/or
wherein the method comprises clamping the first filter component (12) and the second filter component (14) with a clamping element, wherein the clamping element is preferably a hinge clamp with two clamping portions for engaging an outer perimeter of the first filter component (12) and the second filter component (14) adjacent to the second filtering membrane (16) to clamp the second filtering membrane (16) between the first filter component (12) and the second filter component (14).

14. The method of claim 12 or 13, wherein the first filter component (12) and the second filter component (14) are sterilized by autoclaving; and/or
wherein the method comprises inserting a sealing ring into an annular recess (48) of the filter component (12, 14) prior to securing the second filtering membrane (16) between the first filter component (12) and the second filter component (14).

15. The method of any one of claims 12 to 14, wherein the first filter component (12) and the second filter component (14) are sterilized prior to removing the first filtering membrane (16), and/or after removing the first filtering membrane (16), in particular after securing the second filtering membrane (16) between the first filter component (12) and the second filter component (14).

Fig. 1

Fig. 2A

Fig. 2B

Fig. 2C

Fig. 2D

Fig. 3A

Fig. 3B

Fig. 4

Fig. 5

Fig. 6A

Fig. 6B

disconnecting the fluid ports of the filtering system from the fluid channel ⟋S10

separating the first filter component and the second filter component ⟋S12

removing the filtering membrane ⟋S14

clamping a filtering membrane between the first filter component and the second filter component ⟋S16

sterilizing the first filter component and the second filter component ⟋S18

Fig. 7

Europäisches
Patentamt
European
Patent Office
Office européen
des brevets

**EUROPEAN SEARCH REPORT**

Application Number

EP 24 17 6402

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 675 755 B2 (SHICK LEEMEN LOY [US]; KING BRIAN W [GB]; NAT SCIENT CO [US]) 13 June 2017 (2017-06-13) * claim 1; figure 14 * | 1-5 | INV. B01D63/08 |
| X | US 2011/058983 A1 (GADRAT FRANCIS [FR] ET AL) 10 March 2011 (2011-03-10) * claim 5; figure 1 * | 1-3 | |
| X | US 2010/059443 A1 (BRELLISFORD DAMIAN [CA] ET AL) 11 March 2010 (2010-03-11) * paragraph [0065] - paragraph [0068]; claim 1 * | 1-5,12, 14,15 | |
| X | US 2016/251628 A1 (VINCENT JOHN [GB] ET AL) 1 September 2016 (2016-09-01) * claim 1; figure 20 * | 1-3,6 | |
| X | US 4 159 954 A (GANGEMI RONALD J) 3 July 1979 (1979-07-03) * claim 1; figure 3 * | 1-10 | |
| X | US 4 613 568 A (PFEIFFER GOTTFRIED [DE]) 23 September 1986 (1986-09-23) * claim 1; figure 2 * | 1-3,6 | TECHNICAL FIELDS SEARCHED (IPC) B01D |
| X | EP 0 075 405 A1 (SYBRON CORP [US]) 30 March 1983 (1983-03-30) * claim 1; figure 2 * | 1-6, 11-15 | |

The present search report has been drawn up for all claims

| Place of search | Date of completion of the search | Examiner |
|---|---|---|
| Munich | 15 October 2024 | Hoyer, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                        

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6402

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2024

| Patent document cited in search report | | Publication date | Patent family member(s) | | Publication date |
|---|---|---|---|---|---|
| US 9675755 | B2 | 13-06-2017 | CN | 104334212 A | 04-02-2015 |
| | | | EP | 2833942 A1 | 11-02-2015 |
| | | | US | 2013264266 A1 | 10-10-2013 |
| | | | WO | 2013152179 A1 | 10-10-2013 |
| US 2011058983 | A1 | 10-03-2011 | AU | 2009254446 A1 | 10-12-2009 |
| | | | BR | PI0908639 A2 | 19-07-2016 |
| | | | CA | 2723485 A1 | 10-12-2009 |
| | | | CN | 102083482 A | 01-06-2011 |
| | | | EP | 2276521 A2 | 26-01-2011 |
| | | | FR | 2931081 A1 | 20-11-2009 |
| | | | JP | 5750784 B2 | 22-07-2015 |
| | | | JP | 2011520490 A | 21-07-2011 |
| | | | US | 2011058983 A1 | 10-03-2011 |
| | | | WO | 2009147356 A2 | 10-12-2009 |
| US 2010059443 | A1 | 11-03-2010 | AU | 2009288234 A1 | 11-03-2010 |
| | | | CA | 2736814 A1 | 11-03-2010 |
| | | | EP | 2334413 A2 | 22-06-2011 |
| | | | JP | 5767584 B2 | 19-08-2015 |
| | | | JP | 2012501245 A | 19-01-2012 |
| | | | KR | 20110066157 A | 16-06-2011 |
| | | | KR | 20170005184 A | 11-01-2017 |
| | | | KR | 20180083970 A | 23-07-2018 |
| | | | KR | 20190112858 A | 07-10-2019 |
| | | | US | 2010059443 A1 | 11-03-2010 |
| | | | US | 2017145053 A1 | 25-05-2017 |
| | | | US | 2019040099 A1 | 07-02-2019 |
| | | | US | 2021206801 A1 | 08-07-2021 |
| | | | WO | 2010027955 A2 | 11-03-2010 |
| US 2016251628 | A1 | 01-09-2016 | EP | 3062917 A1 | 07-09-2016 |
| | | | US | 2016251628 A1 | 01-09-2016 |
| | | | WO | 2015063489 A1 | 07-05-2015 |
| US 4159954 | A | 03-07-1979 | NONE | | |
| US 4613568 | A | 23-09-1986 | AT | E71728 T1 | 15-02-1992 |
| | | | CA | 1256273 A | 27-06-1989 |
| | | | DE | 3314937 A1 | 31-10-1984 |
| | | | DK | 207084 A | 26-10-1984 |
| | | | EP | 0123316 A2 | 31-10-1984 |
| | | | JP | S6041576 A | 05-03-1985 |
| | | | US | 4613568 A | 23-09-1986 |
| EP 0075405 | A1 | 30-03-1983 | AU | 553526 B2 | 17-07-1986 |

EPO FORM P0459

For more details about this annex : see Official Journal of the European Patent Office, No. 12/82

page 1 of 2

# EP 4 650 037 A1

## ANNEX TO THE EUROPEAN SEARCH REPORT
## ON EUROPEAN PATENT APPLICATION NO.

EP 24 17 6402

15-10-2024

| Patent document cited in search report | Publication date | Patent family member(s) | | Publication date |
|---|---|---|---|---|
| | | CA | 1198063 A | 17-12-1985 |
| | | EP | 0075405 A1 | 30-03-1983 |
| | | JP | S648295 B2 | 13-02-1989 |
| | | JP | S5861439 A | 12-04-1983 |

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9675755 B2